Europäisches Patentamt

European Patent Office

Office européen des brevets

(11) Veröffentlichungsnummer: **0 121 596**
A2

(12) # EUROPÄISCHE PATENTANMELDUNG

(21) Anmeldenummer: 83110794.1

(22) Anmeldetag: 28.10.83

(51) Int. Cl.³: **G 11 B 15/43**, G 11 B 15/22, G 11 B 15/26

(30) Priorität: 02.04.83 DE 3312183

(43) Veröffentlichungstag der Anmeldung: **17.10.84**
**Patentblatt 84/42**

(84) Benannte Vertragsstaaten: **AT BE CH DE FR GB LI**

(71) Anmelder: **GRUNDIG E.M.V. Elektro-Mechanische Versuchsanstalt Max Grundig & Co. KG., Kurgartenstrasse 37, D-8510 Fürth (DE)**

(72) Erfinder: **Mangold, Hans, Bussardstrasse 18, D-8510 Fuerth (DE)**

(54) **Vorrichtung zur Regelung des Bandzuges eines Magnetbandes bei Bildaufzeichnungs- und -wiedergabegeräten.**

(57) Es wird eine Vorrichtung zur Regelung des Bandzuges eines Magnetbandes bei normallaufend und schnellaufend betriebenem Bildaufzeichnungs- und -wiedergabegerät beschrieben, bei der die Bandantriebstrommeln des Gerätes über ein um eine Achse eines Antriebsmotors schwenkbar gelagertes Zwischengetriebeteil antreibbar sind, und auf beiden Bandantriebstrommeln je ein schwenkbar gelagerter Bremshebel einwirkt. Der Antriebsmotor ist hierbei mittig zu den beiden Antriebstrommeln auf einem Schwenkrahmen gelagert. Über die Ineingriffnahme des Schwenkrahmens auf die beiden Bremshebel ist in Abhängigkeit von der Drehrichtung und dem Drehmoment des Antriebsmotors der Bandzug des Magnetbandes regelbar.

ACTORUM AG

VORRICHTUNG ZUR REGELUNG DES BANDZUGES EINES MAGNET-
BANDES BEI BILDAUFZEICHNUNGS- UND -WIEDERGABEGERÄTEN


BESCHREIBUNG:

Es sind verschiedene Vorrichtungen zur Regelung des Bandzuges eines bandförmigen Trägers in Ton- bzw. Bildaufzeichnungs- und -wiedergabegeräten bekannt. Bei Geräten dieser Art, insbesondere bei Videogeräten hat sich ein Geräteantrieb mit mehreren Antriebsmotoren als besonders vorteilhaft erwiesen, da hierbei jede der beiden Bandwickeltrommeln von einem eigenen Motor angetrieben werden. Somit ist bei Geräten mit getrennten Bandwickelmotoren eine vorteilhafte elektronische Bandzugregelung möglich. Die Motore können bei einer derartigen Bandwickelantriebsausführung über eine Gegenstromschaltung auch als Bandbremseinrichtung verwendet werden. In Abhängigkeit der Wickeldrehzahlunterschiede vom abspulenden zum aufspulenden Bandwickel wird der Motor des abspulenden Wickels durch Anlegen eines Gegenstroms gebremst und eine Regelung des

- 2 -                           0121596

Bandzuges zum aufspulenden Bandwickelmotor wird hierdurch erreicht. Geräte mit mehreren Antriebsmotoren
sind jedoch aufwendig und daher in der Herstellung
teuer. Es ist insbesondere bei Tonbandgeräten auch
ein Antrieb der Bandwickeltrommeln über nur einen Antriebsmotor bekannt, wobei der Motorantrieb über ein
Schaltgetriebe mit den Bandantriebstrommeln gekoppelt
ist. Zusätzlich ist bei einem derart aufgebauten
Geräteantrieb noch eine Grundbremsung für den abspulenden Bandwickel erforderlich. Verwendung finden
hierfür gewichtsabhängige Grundbremseinrichtungen oder
es sind auch Geräte bekannt, die eine fühlhebelgesteuerte Grundbremsung an den Bandantriebstrommeln aufweisen. Die Bremse kann hierbei als Seilbremse, Bandbremse oder auch als Backenbremse ausgeführt sein. Das
Grundbremsmoment wird durch jeweils einen Fühlhebel
geregelt, wobei als Regelkriterium der Umschlingungswinkel des Fühlhebels dient, dessen Umschlingungswert
sich nach dem Wickeldurchmesser der Wickelspule ändert
und so durch Winkeländerung der Kraftkomponente am
Fühlhebel z.B. den Andruck des Bremshebels beeinflußt.

Auch eine Bandzugsregelung über einen eigenen Fühlhebel
ist aufwendig und bedarf zusätzlicher Steuerungseinrichtungen zur Umschaltung des Fühlhebeleingriffs bei
Laufrichtungsänderung. Da inzwischen auch bei Videogeräten Laufwerksantriebe von einfachstem Aufbau
gewünscht werden, ist es auch bei solchen Geräten er-

- 2 -

strebenswert, einen Bandantrieb nur über einen Antriebsmotor und einer einfachen Bandzugsregelung auszuführen.

Aufgabe der Erfindung ist es daher, eine Vorrichtung zur Regelung des Bandzuges eines Magnetbandes für Videogeräte zu schaffen, die nur mit einem Bandantriebsmotor ausgerüstet ist und bei der die Regelung des Magnetbandzuges ohne zusätzliche Fühlhebelanordnung möglich ist.

Diese Aufgabe iwrd erfindungsgemäß durch die im kennzeichnenden Teil des Anspruchs 1 angegebenen Merkmale gelöst.

Vorteilhafte Ausgestaltungen der erfindungsgemäßen Vorrichtung zur Regelung des Bandzuges eines Videorecorders ergeben sich aus den Unteransprüchen.

Ein Ausführungsbeispiel der Erfindung wird nachfolgend anhand einer Zeichnung näher erläutert.

Die dargestellte Zeichnung zeigt die beiden Bandantriebstrommeln 1, 2 eines Videorecorders, die in bekannter Weise auf einem Chassis 3 angeordnet sind. Angetrieben werden die Bandantriebstrommeln über ein um die Achse 4 eines Antriebsmotors 5 schwenkbar gelagertes Getriebeteil 6. Das Getriebeteil besteht aus dem Motorritzel 7, aus einem mit einer Reibungskupplung versehenem Zwischenrad und aus einem Schwenkbügel 9. Der Schwenkbügel 9 ist am Antriebsmotor 5
und zentral zu dessen Achse schwenkbar gelagert. Das
Zwischenrad 8 ist somit ständig in Eingriff zum Motorritzel 7 und kann um die Achse 4 des Antriebsmotors
bei dessen Drehrichtungsänderung sowohl an der einen
als auch an der anderen Bandantriebstrommel anliegen
bzw. mit diesen in Eingriff sein. Die Getriebeteile
7, 8 und der in Eingriff hierzu kommende Teil der
Bandantriebstrommeln 1, 2 sind als Zahnräder ausgebildet. Der Antriebsmotor 5 ist in einem Schwenkrahmen 10
befestigt, wobei der Schwenkrahmen selbst mittig zu
den beiden Antriebstrommeln schwenkbar gelagert ist.
Im einzelnen besteht der Schwenkrahmen 10 aus einem
Wippenteil 11, das mittig eine Lagerstelle aufweist,
und einem den Motor mit Getriebeteil aufnehmenden
bügelartigen Rahmenteil 13. Im Bereich der Lagerstelle
des Schwenkrahmens 10 befinden sich auch die Lagerstellen 14, 15, der Bremshebel 16, 17. Die Bremshebel
16, 17 sind ebenfalls wie die Bandantriebstrommeln 1,2
und der Schwenkrahmen 10 auf dem Chassis 3 gelagert.
Der einzelne Bremshebel besteht aus einem einen Bremsbelag tragenden Hebelteil 18 und aus einem auf dem
Wippenteil des Schwenkrahmens 10 anliegenden Hebelteil
19. In der Verlängerung des den Bremsbelag 20 tragenden Hebelteils 18 wirkt eine Zugfeder 21 ein, die im
Chassis 3 gelagert ist.

Die Zugfedern sind derart an den beiden Bremshebeln angeordnet, daß im Bandruhezustand bei abgeschalteten Antriebsmotor der Schwenkrahmen mit Antriebsmotor und Getriebeteil in einer Gleichgewichtslage gehalten wird, und der Bremsbelag der beiden Bremshebel jeweils an der zugeordneten Bandantriebstrommel bei gleichem Andruck anliegt. Soll nun das Magnetband aufgespult werden und der Antriebsmotor wird hierzu eingeschaltet, so wird dieser nach der seiner Drehrichtung entgegengesetzten Seite als Gegenkraft zu seinem zu übertragenden Drehmoment ausgelenkt und lüftet über den Schwenkrahmen den auf der bandabwickelnden Seite der nicht angetriebenen Antriebstrommel angeordneten Bremshebel. Als Folge der ausschwenkenden Bewegung des Schwenkrahmens stellt sich ein Gleichgewicht zwischen der Teilkomponente der Motorkraft durch das Gegendrehmoment und der Kraft über die Federanordnung an den Bremshebeln ein. Da sich nun bei einem ansteigenden Bandzug auch das Drehmoment des Antriebsmotors erhöht und hierbei der Schwenkrahmen die Bremsung der abwikkelnden Bandtrommelseite aufhebt und somit der Bandzug abnimmt, wird der allgemein gewünschte Bandzugswert erreicht bzw. eingehalten.

0121596

VORRICHTUNG ZUR REGELUNG DES BANDZUGES EINES MAGNET-
BANDES BEI BILDAUFZEICHNUNGS- UND -WIEDERGABEGERÄTEN


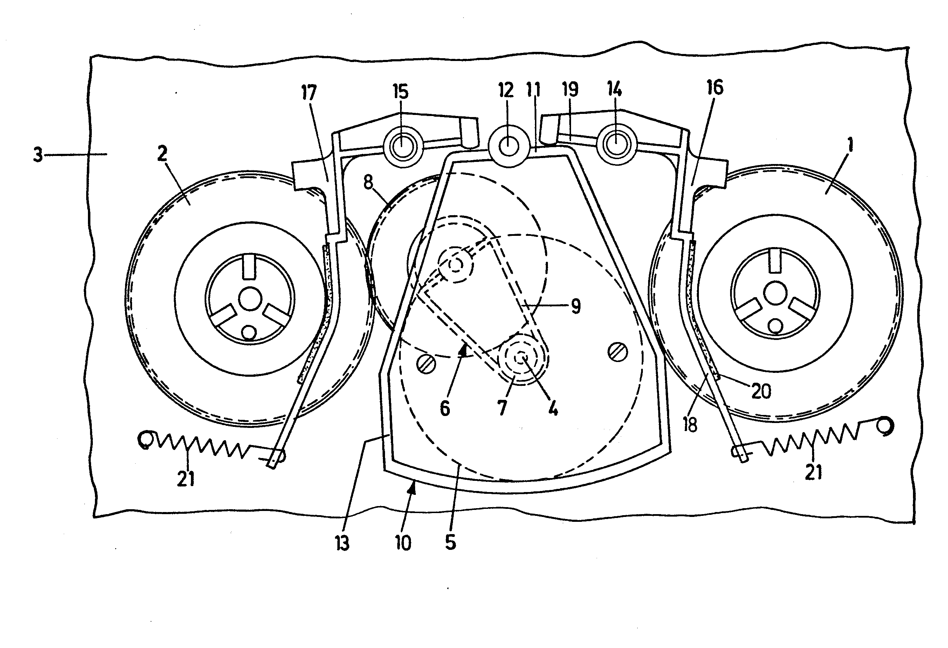

PATENTANSPRÜCHE


1. Vorrichtung zur Regelung des Bandzuges eines Magnetbandes bei normallaufend und schnellaufend betriebenen Bildaufzeichnungs- und -wiedergabegeräten, bei denen die Bandantriebstrommeln über ein um die Achse eines Antriebsmotors schwenkbar gelagertes Zwischengetriebeteil antreibbar sind und auf beiden Bandantriebstrommeln ein schwenkbar gelagerter Bremshebel einwirkt, d a d u r c h  g e k e n n - z e i c h n e t ,  daß der Antriebsmotor (5) mit schwenkbar verbundenem Getriebeteil (6) auf einem als Wippe ausgebildeten Schwenkrahmen (10) mittig zu den beiden Bandantriebstrommeln (1, 2) gelagert ist, und daß die beiden Bremshebel (16, 17) jeweils mit einem Hebelteil auf dem Wippenteil (11) des Schwenkrahmens anliegen und in Abhängigkeit von der Drehrichtung und dem Drehmoment des Antriebsmotors auf den auf der bandab-

- 2 -

abwickelnden Seite der Bandantriebstrommel befindlichen
Bremshebel (17) einwirkt und dessen Bremskraft auf die
Bandantriebstrommel regelt, während der auf der bandaufwickelnden Seite des Bandantriebs angeordnete Bremshebel von der Bandantriebstrommel abgehoben wird.

2. Vorrichtung nach Anspruch 1, d a d u r c h
g e k e n n z e i c h n e t , daß die beiden Bremshebel (16, 17) über eine abgestimmte Federanordnung im
Bandruhezustand bei abgeschaltetem Antriebsmotor derart
auf das Wippenteil (11) des Schwenkarms (10) einwirken,
daß der Schwenkrahmen mit Motor und Getriebeteil in
einer senkrechten Gleichgewichtslage gehalten ist und
gleichzeitig der Bremsbelag (20) der beiden Bremshebel
(16, 17) jeweils an der Bandantriebstrommel (1, 2) anliegt.

3. Vorrichtung nach Anspruch 1 und 2, d a -
d u r c h g e k e n n z e i c h n e t , daß der
Schwenkrahmen (10) aus einem mittig mit einer Lagerstelle (12) versehenem Wippenteil (11) und einem daran
anschließenden, den Motor mit Getriebeteil aufnehmenden,
bügelartigen Rahmenteil (13) besteht.

4. Vorrichtung nach den Ansprüchen 1 bis 3,
d a d u r c h g e k e n n z e i c h n e t , daß
der Bremshebel (16, 17) aus einem einen Bremsbelag (20)
tragenden und aus einem auf dem Wippenteil des Schwenkrahmens anliegenden Hebelteil besteht, und daß sich zwischen den beiden Hebelteilen eine Lagerstelle·(14, 15) befindet, und in der Verlängerung des den Bremsbelag tragenden Hebelteils eine Zugfeder (20) einwirkt.

5. Vorrichtung nach den Ansprüchen 1 bis 4, d a d u r c h   g e k e n n z e i c h n e t ,   daß das Getriebeteil (6) aus dem Motorritzel (7), aus einem mit einer Reibungskupplung versehenen Zwischenrad (8) und aus einem Schwenkbügel (9) besteht, wobei der Schwenkbügel das Zwischenrad in stetigem Eingriff zum Motorritzel hält und das Zwischenrad in Abhängigkeit der Motorlaufrichtung jeweils in Eingriff zu einem der beiden Bandantriebstrommeln steht.

6. Vorrichtung nach den Ansprüchen 1 bis 5, d a d u r c h   g e k e n n z e i c h n e t ,   daß die Getriebeteile und der in Eingriff hierzu kommende Teil der Bandantriebstrommeln als Reibräder oder verzahnte Getrieberäder ausgebildet sind.

Reg. 1901

0121596